Europäisches Patentamt

European Patent Office

Office européen des brevets

(11) Publication number: **0 498 076 A1**

# EUROPEAN PATENT APPLICATION

(21) Application number: **91122038.2**

(22) Date of filing: **20.12.91**

(51) Int. Cl.5: **H01M 2/16, H01M 8/10**

(30) Priority: **21.12.90 US 632268**

(43) Date of publication of application:
**12.08.92 Bulletin 92/33**

(84) Designated Contracting States:
**BE CH DE ES FR GB IT LI NL SE**

(71) Applicant: **THE DOW CHEMICAL COMPANY**
**2030 Dow Center Abbott Road**
**Midland, MI 48640(US)**

(72) Inventor: **Carl, William P.**
**P.O. Box 843**
**Angleton, Texas 77515(US)**
Inventor: **Cisar, Alan J.**
**2546 Coopers Post Lane**
**Sugar Land, Texas 77478(US)**
Inventor: **Door, Robert D.**
**200 Brazoswood Drive 824**
**Clute, Texas 77531(US)**
Inventor: **Black, Lance L.**
**401 Oyster Creek Court**
**Richwood, Texas 77531(US)**

(74) Representative: **Huber, Bernhard, Dipl.-Chem.**
**et al**
**Patentanwälte H. Weickmann, Dr. K. Fincke**
**F.A. Weickmann, B. Huber Dr. H. Liska, Dr. J.**
**Prechtel Kopernikusstrasse 9 Postfach 86 08**
**20**
**W-8000 München 86(DE)**

(54) **A proton exchange membrane particularly suitable for use in a fuel cell.**

(57) The invention is a fluoropolymer material particularly suitable for use as a proton exchange membrane in a proton exchange membrane fuel cell. The characteristics that make the material particularly useful are the fact that is has an equivalent weight between 700 and 1,000 and a water absorption as high as about 100 weight percent, based on dry membrane.

In addition, it is desirable for the nonionic precursor form of the proton exchange membrane polymer to have a melt viscosity of between 6,000 and 80,000 Poise at 250°C in accordance with ASTM test method D-3835.

The invention also includes a film formed from the fluoropolymer material that has a thickness of from 0.002 inch (0.0051) to 0.009 inch (0.0229 cm). In addition, the invention includes a PEM fuel cell containing the high-performance PEM fuel cell film and a method for generating electricity using the PEM fuel cell.

# FIG.I

The present invention relates to a high performance fluoropolymer membrane for use in solid polymer electrolyte fuel cells.

There are several types of fuel cells known, including a proton exchange membrane fuel cell (PEM fuel cell). In a PEM fuel cell, an anode is positioned in an anode compartment, and a cathode is positioned in a cathode compartment. The two compartments are separated by a membrane that is capable of transferring protons between the two compartments. A fluid reactant, for example hydrogen, is fed to the anode compartment and a fluid reactant, for example oxygen, is fed to the cathode compartment. Reactions occur at the anode and at the cathode, thereby producing electricity. Protons pass through the membrane between the anode and the cathode. The membrane should be made of a material that has the ability to transfer large numbers of protons, yet be physically and chemically stable during the operation of the PEM fuel cell. Fluoropolymer membrane films are known to be suitable for use as PEM fuel cell membranes. For example, it is known to use Nafion fluoropolymer film as a membrane in a PEM fuel cell (see for example "Interim Report New Membrane-Catalyst for Solid Polymer Electrolyte Systems", P.O. No. 9-X53-D6272-1, Project Engineer: R. J. Lawrance, Prepared for University of California Los Alamos National Laboratory, P.O. Box 1663, Los Alamos, New Mexico 87545 by General Electric, Electrochemical Energy Conversion Programs, 50 Fordham Road, Wilmington, Massachusetts 01887; and "Application of Perfluoro Carbon Solid Polymer Electrolytes In Fuel Cells and Electrolyzers" by A. B. Laconti, General Electric Company, presented at American Chemical Society - Polymer Division Topical Workshop on Perfluorinated Ionomer Membranes, February 23-26, 1982, Lake Buena Vista, Florida). It has been observed that some fluoropolymer membrane work significantly better than others in PEM fuel cells, however, the reasons for the differences in performance has not been known. Nevertheless, some membranes produce up to three or more times power in comparable fuel cells, than do other membranes. It would be highly desirable to know which membranes would be expected to perform exceptionally well in PEM fuel cells and to know how to produce such high-performance membranes.

The present invention describes methods to be used to manufacture high-performance PEM fuel cell membranes, and how to identify a surprising combination of physical and chemical characteristics that should be present in a PEM fuel cell membrane to allow it to give such high performance.

The invention is a fluoropolymer material particularly suitable for use as a proton exchange membrane in a proton exchange membrane fuel cell. The characteristics that make the material particularly useful are the fact that it has an equivalent weight between 700 and 1,000 and a water absorption as high as 100 weight percent, based on dry membrane.

In addition, it is desirable for the nonionic precursor form of the proton exchange membrane polymer to have a melt viscosity of between 6,000 and 80,000 Poise at 250°C in accordance with ASTM test method D-3835.

The invention also includes a film formed from the fluoropolymer material that has a thickness of from 0.002 inch (0.0051) to 0.009 inch (0.0229 cm). In addition, the invention includes a PEM fuel cell containing the high-performance PEM fuel cell film and a method for generating electricity using the PEM fuel cell.

## DETAILED DESCRIPTION OF THE INVENTION

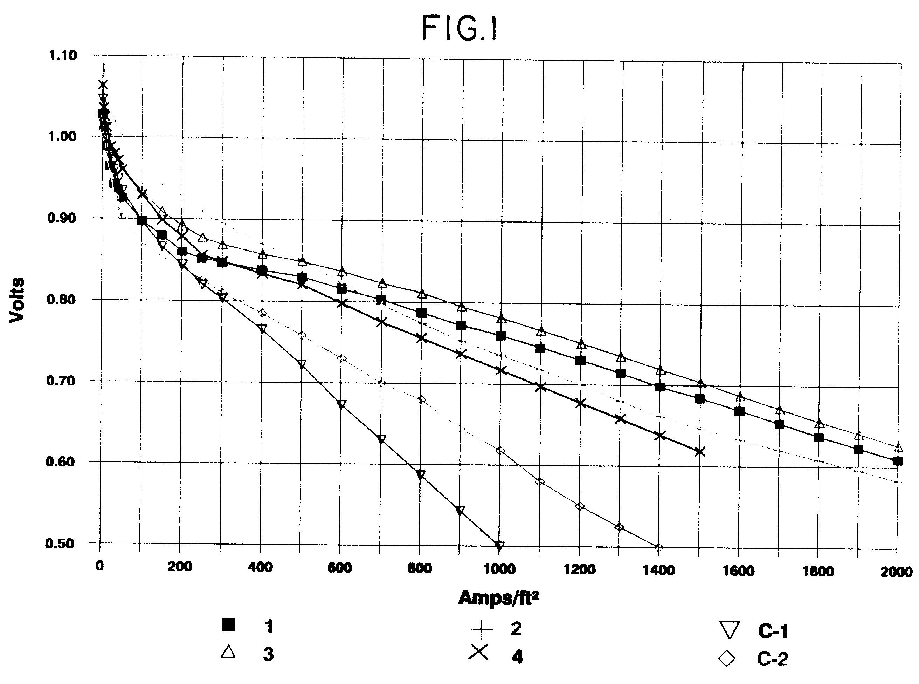

Figure 1 shows a polarization curve for the examples and the comparative examples. The data was obtained with a single-cell fuel cell. It shows the voltage obtained in such a cell as a function of the current generated per unit active area of the cell. The higher this voltage, at any current density, the more efficiently the fuel is being converted to electrical energy, and since the power output is the product of the voltage and the current, the higher the voltage, the higher the power output of the cell at that current density. The higher the power output of the cell, the smaller total cell size in needed for a specific application. This means that high performance fuel cell membranes give a more efficient conversion of fuel to electricity from a smaller sized power generating unit.

The expected performances of the high power fuel cell membranes is significantly greater than the two comparative examples and demonstrates the advantage of the technology. The two polymers falling outside the specifications of the high power fuel cell membranes mean that devices using such polymers in them would have to be greater in size and expense than devices using the high power membranes. As the Figure shows, at 1000 amperes per square foot, Comparative Example 1 would have a voltage of 0.5V and Example 3 would have a voltage of about 0.78. This is 56 percent greater power output. Also, the Figure shows that the difference is growing with high current demands. Such a difference is significant in deter mining the overall cost of energy producing systems. Further, the ability to make blends of polymers that fall within this unique set of properties increases the availability of polymers which can be used to form high power fuel cell membranes.

## Equivalent Weight

Although a wide range of equivalent weight fluoropolymers are useful as PEM fuel cell membranes, those that are particularly useful are those that have equivalent weights of from 700 to 1,000. More preferably, the minimum equivalent weight is greater than 750. Most preferably the minimum equivalent weight is 770. Also, preferably, the maximum equivalent weight is less than 850. Most preferably, the maximum equivalent weight if less than 830.

At equivalent weights less than 700, the hydration of the membrane becomes excessive and the swelling of the membrane is excessive. At equivalent weights greater than 1000, the hydration of the polymer is not sufficient to assure proton transfer of a high-power polymeric fuel cell and the fluoropolymer becomes more like traditional fluoropolymer membranes of the prior art.

## Procedure for Determining Equivalent Weight

There are a variety of methods that can be used to determine equivalent weights of proton exchange membranes, however, the membranes described in the present invention had their equivalent weights determined according to the procedure described hereinafter.

About 2 grams of a sulfonic fluoropolymer is weighed into a 250 milliliter (ml) FEP Teflon Erlenmeyer flask. A Teflon-covered stirring bar is added to the flask and about 20 ml of an about 1.0 weight percent solution of cetyltrimethylammonium bromide is added. Thereafter, about 100 ml of approximately 0.1 Normal NaOH and about 50 ml of dimethylsulfoxide is added to the flask. The flask is then placed on a stirring hot plate with a condenser attached to the top of the flask through a stopper. The flask is positioned in an oil bath and the temperature of the contents of the flask is controlled to a temperature of about 80°C. The flask is left with stirring at about 80°C for about 24 hours. The condenser is removed and rinsed with deionized water and the contents of the flask is allowed to cool to room temperature. The sulfonic fluoropolymer sample is then transferred to a beaker and the flask is rinsed thoroughly. The beaker contents are then titrated with approximately 0.1 normal HCl solution. The equivalent weight is then calculated using the following formula:

Equivalent Weight
= {wt. of dry sample$^*$2000)/[meq. of base - (volume of 0.1N HCl/10)]}

## Water Absorption

It has been determined that high-performance PEM fuel cell membranes can have a water absorption of up to 100 weight percent, as compared to their original weight, based on dry membrane. Preferably, their water absorption is greater than 35 weight percent, more preferably it is greater than 50 weight percent. Preferably, also, water absorption is less than 100 weight percent, more preferably it is less than 70 weight percent. Most preferably, the water absorption is greater than 50 weight percent and less than 70 weight percent.

At higher water absorptions, the fluoropolymer expands excessively. Excessive linear expansions of greater than 40 percent can occur and fitting mechanical systems together is very difficult. Also, wrinkling of the fluoropolymer film can block gas passages in a fuel cell, thereby causing the fuel cell to operate in a less-than-efficient manner. Also, the wrinkling weakens the fluoropolymer films.

At water absorptions less than 35 weight percent, insufficient hydration occurs. Insufficient hydration does not allow adequate proton transport if the water per functional group is too low.

Water absorption may be determined in a variety of ways. However, the proton exchange membranes described in the present invention had their water absorption values determined according to the procedure described hereinafter.

1) Cut out and label at least three samples of each membrane to be tested. Each sample should be about 1 inch (2.54 centimeters, cm) by 2 inches (5.08 cm).

2) Place the samples into a vacuum oven at about 105°C and at a vacuum of about 30 inches (76.2 cm) mercury. Allow the samples to dry for at least about 6 hours.

3) After about 6 hours, slowly feed dry nitrogen into the vacuum oven until it is at atmospheric pressure.

4) Quickly remove the samples and weigh them on a precision balance to the nearest 0.1 milligram (mg) Record this weight as "D".

5) Place the samples into a container of deionized water at about 100°C and allow the samples to boil for approximately 30 minutes.

6) Remove the samples from the water and place them into another container of deionized water at 30°C, and allow them to equilibrate for approximately 30 minutes. (Alternately, allow entire container of boiled water to cool to 30°C.)

7) Remove the samples and wipe or blot off any surface moisture with a paper towel. Work quickly to avoid water loss from the membrane by evaporation, but be sure to remove all droplets on the surface. Then weigh the sample and record this weight as "W".

8) The formula for percent water uptake is:

P = [(W - D)/D] X 100

Where P is weight percent water retained (30°C),
W is the weight of the wet sample, and
D is the weight of the dry sample.

## Melt Viscosity

Melt viscosity is the flow property of the melted thermoplastic form of the polymers, as determined using Instron Model 3211 capillary rheometer in accordance with ASTM Test Method D-3835.

In addition to the other two characteristics (equivalent weight and water absorption) described above, it has been discovered that there is a third characteristic that can be used to determine whether a proton exchange membrane will have the characteristic of transferring large quantities of protons in a PEM fuel cell, i.e. melt viscosity of the precursor thermoplastic form of the fluoropolymer. It has been determined that high-performance PEM fuel cell membranes have a melt viscosity between 6,000 and 80,000 poise at 250°C in accordance with ASTM test method D-3835. Preferably the melt viscosity is greater than 18,000 poise, more preferably, it is greater than 30,000 poise. Preferably, it is less than 80,000 poise and more preferably it is less than 60,000 poise. Most preferably it is greater than 30,000 poise and less than 60,000 poise.

At melt viscosities substantially greater than 80,000 poise, the ionomeric form of the polymers can become more rigid and attachment of the electrodes becomes difficult. This can be compensated for up to a point by more stringent electrode attachment conditions such as higher temperatures and pressures; however, this is more likely to cause damage to the membrane and/or electrode structures.

At melt viscosities less than 6,000 poise, the coefficient of expansion is excessive and solvent and moisture in the fluoropolymer swells the fluoropolymer too much. This results in the fluoropolymers having poor strength properties, as compared to those polymers with melt viscosities greater than 6,000 poise.

## Fluoropolymers

Fluoropolymer materials that are most suitable for use in the present invention are copolymers of monomer I with monomer II (as defined below). Optionally, a third type of monomer may be copolymerized with I and II, to form a terpolymer.

The first type of monomer is represented by the general formula:

$$CF_2 = CZZ' \qquad (I)$$

where:
Z and Z' are independently selected from the group consisting of -H, -Cl, -F, or -$CF_3$.

The second type of monomer consists of one or more monomers selected from compounds represented by the general formula:

$$Y-(CF_2)_a-(CFR_f)_b-(CFR_{f'})_c-O-[CF(CF_2X)-CF_2-O]_n-CF=CF_2 \qquad (II)$$

where:
Y is -$SO_2Z$
Z is -I, -Br, -Cl, -F, -OR, or -$NR_1R_2$;
R is a branched or linear alkyl radical having from 1 to 10 carbon atoms or an aryl radical;
$R_1$ and $R_2$ are independently selected from the group consisting of -H, a branched or linear alkyl radical having from 1 to 10 carbon atoms or an aryl radical;
a is 0-6;
b is 0-6;
c is 0 or 1;
provided a + b + c is not equal to 0;
X is -Cl, -Br, -F, or mixtures thereof when n>1;
n is 0 to 6; and
$R_f$ and $R_f$ are independently selected from the group consisting of -F, -Cl, perfluoroalkyl radicals having from 1 to 10 carbon atoms and fluorochloroalkyl radicals having from 1 to 10 carbon atoms.

Particularly preferred is when Y is -$SO_2F$; n is 0 or 1; $R_f$ and $R_f$ are -F; X is -Cl or -F; and a + b + c is 2 or 3.

The third, and optional, monomer suitable is one or more monomers selected from the compounds represented by the general formula:

$$Y'-(CF_2)_{a'}-(CFR_f)_{b'}-(CFR_{f'})_{c'}-O-[CF(CF_2X')-CF_2-O]_{n'}CF=CF_2 \qquad (III)$$

where:
Y' is -F, -Cl or -Br;
a' and b' are independently 0-3;
c is 0 or 1;
provided a' + b' + c' is not equal to 0;
n' is 0-6;
$R_f$ and $R_{f'}$ are independently selected from the group consisting of -Br, -Cl, -F, perfluoroalkyl radicals having from 1 to 10 carbon atoms, and chloroperfluoroalkyl radicals having from 1 to 10 carbon atoms; and X' is -F, -Cl, -Br, or mixtures thereof when n' >1.

## Polymer Preparation

The polymers may be prepared according to the procedures fully described in U.S. Patents 4,554,112; 4,337,211; 4,578,512; 4,834,922; 4,804,727; 4,358,412; 4,515,989; 4,687,821; 4,330,654; 4,470,889; 4,358,545; 4,417,969; 4,478,695; 4,337,137; and 4,462,877.

As has been discussed, the PEM membranes of the present invention desirably have a water absorption within a certain desired range. It is possible to tailor the polymer preparation steps in a way to produce a polymer having a water absorption within the desired range. The water absorption is somewhat dependent upon the equivalent weight of the polymer. The means effect of equivalent weight on water absorption is fully discussed in "Perfluorinated Ion Exchange Membrane", The Electrochemical Society, Houston, TX, May 7-11, 1972, W. G. F. Grot, G. E. Munn and P. N. Walmsley.

The PEM membranes of the present invention desirably have an equivalent weight within a certain desired range. It is possible to tailor the polymer preparation steps in a way to produce a polymer having an equivalent weight within the desired range. Equivalent weight is a function of the relative concentration of the reactants in the polymerization reaction. The ratio of the effect of copolymerization reactants on the equivalent weight of the final products is addressed in *Emulsion Polymerization-Theory and Practice,* by D. C. Blackley, published by John Wiley & Sons.

The PEM membranes of the present invention desirably have a melt viscosity within a certain desired range. It is possible to tailor the polymer preparation steps in a way to produce a polymer having a melt viscosity within the desired range. The melt viscosity is based upon the concentration of the initiator and by the temperature of the reaction. Controlling the melt viscosity of polymers is discussed fully in *Emulsion Polymerization-Theory and Practice*, by D. C. Blackley, published by John Wiley & Sons.

## Film Formation

After the polymer has been prepared, as already discussed, it is necessary for it to be formed into a film, so it can be used in a fuel cell.

The polymer described above may be formed into a film by a variety of methods. For example, the film can be extruded according to the teachings of U.S. 4,437,952. Also, it can be formed into a film using solution/dispersion methods, as described in U.S. 4,784,882. A dispersion of about 10.5 weight percent solids is most preferred. As in U.S. 4,784,882, the dispersion may be coated on a substrate using mechanical means to a desired thickness.

## Membrane Thickness

The thickness of a hydrated membrane from two to seven mils (0.0051 to 0.0178 cm) is desirable, although thicknesses outside this range are operable. Membranes that have thicknesses less than two mils (0.0051 cm) are difficult to mount mechanically and delicate in handling. Membrane that have thicknesses greater than seven mils (0.0178 cm) have a greater voltage loss and do not conduct proton current as well as thinner membranes.

## Hydrolysis

The film obtained by one of the above film-forming process is then hydrolyzed in an approximately 25 weight percent NaOH solution to convert the nonionic thermoplastic form of the polymer to the ionic functional form which will have ion transport properties. The hydrolysis step is particularly important in producing a high power output fuel cell membrane and electrode assembly because during the hydrolysis step the nonfunctional polymer film is heated and reacted as shown below during which process, the film is softened and swollen with moisture in a controlled manner. Incomplete hydrolysis leaves covalently bonded functional groups whose lack of mobile ions lead to insulating regions within the membrane. The density of the hydrolysis solution is preferably between 1.26 and 1.28 grams per ml at ambient temperature. The hydrolysis process requires two moles of NaOH for each mole of the functional group in the polymer, as shown in the following equation:

$$-CF_2SO_2Z + 2NaOH \rightarrow -CF_2SO_3Na + NaZ + H_2O$$

Where Z is -I, -Br, -Cl, -F, -OR, or -NR$_1$R$_2$;
R is a branched or linear alkyl radical having from 1 to 10 carbon atoms or an aryl radical;
R$_1$ and R$_2$ are independently selected from the group consisting of -H, a branched or linear alkyl radical having from 1 to 10 carbon atoms or an aryl radical;

Polymers which have been found to be particularly suitable for high power fuel cell operation preferably have an expansion during hydrolysis of 25 percent to 35 percent. To insure the correct size for the final application, the expansion is presumed to be on the order of 20 percent. In that way, there is some trim to be done after the final cell assembly. In the GE-LANL cell (referred to above), the active area is about 1/20 square foot (46.5 cm$^2$); however, the total film size, including gasket area is about 4 inches square (103.2 cm$^2$). If individual films were being hydrolyzed, the starting size would then be about 3.65 in. x 3.65 in. (9.27 cm X 9.27 cm). For hydrolysis, the films are placed in the hydrolysis bath at room temperature, with inert, mesh materials holding the films in the liquid--making sure that there are no trapped bubbles around the films. The bath is then heated to about 85°C to about 90°C and then held at that temperature for a minimum of four hours to insure complete hydrolysis and expansion to the correct level. During the heating process, the membranes should be checked to insure that no bubbles accumulate under the films.

After the hydrolysis heating step, the bath is allowed to cool to room temperature and the membranes are then removed from the bath and rinsed with high purity deionized water, then placed in a deionized water bath to leach out residual ionic substances.

### Converting To Proton Form By Ion Exchange

The membranes are in the sodium form at this stage of their preparation and must be exchanged to the proton form for fuel cell use by reaction with a strong acid, for example sulfuric acid as shown below, according to the following reaction:

$$-CF_2SO_3Na + H_2SO_4 \longrightarrow -CF_2SO_3H + NaHSO_4$$

Again, there are a variety of methods to use to convert the membranes to their proton form. The membranes described in the present invention were converted according to the procedure described below.

To accomplish this conversion, two baths are utilized. The films are placed in a first bath and allowed to remain for 4 to 6 hours and then placed in the second bath for an additional time of 4 to 6 hours. The use of this two-step procedure assures complete conversion and at the same time minimizes the amount of waste acid for disposal. The membranes are then removed from the bath and rinsed with deionized water and stored in deionized water until ready for the final cleanup step. High power fuel cell membranes are preferably substantially free of any residual acids, so the films are boiled in deionized water up to about three times to insure that substantially all free acids and ionics are removed. Once the membranes are in the final, fully hydrated form, they can be stored in contact with water until ready for use.

### Electrode Fabrication

For use in a fuel cell, the high performance fuel cell membranes described above preferably have an electrode coated on and/or bonded to their surface. The following description illustrates one way that an electrode can be coated on and/or bonded to the membrane. There are a wide variety of methods for applying an electrode. Any of such methods can be used with the high performance membranes of the present invention. In other words, the method used for applying the electrode is not critical to the present invention, but is described for completeness of the description for making and using the high performance membranes of the present invention. The electrode fabrication process is comprised of two steps, wet proofing the conductive carbon fiber paper, fabric, or other conductive porous substrates that serve as the current collector and forming the actual platinum electrode.

Wet proofing is required to insure an adequate moisture rejection rate from the electrode. Without wet proofing, the porous substrate retains water within its porosity. The retained water blocks part of the porosity, and slows the gas flow through the paper to the platinum catalyst. With the gas flow blocked, the cell's output is reduced. An electrode in this condition is considered "flooded".

Flooding can also occur within the catalytic region of the electrode, if the electrode is not properly formulated to reject water. All of the fabrication work described here deals with platinum black as the catalytic material. Carbon paper is typically used in this application, such as Stackpole Carbon's PC-206. A typical wetproofing agent is DuPont's T-30 Teflon latex.

Electrodes may be formed from the fluoropolymer films of the present invention in a variety of ways. A variety of such methods are known in the art. However, for the purpose of complete disclosure, the following procedure is described. This is the procedure that was used to prepare test the high performance membranes of the present invention.

The procedures for preparing the substrate and preparing electrode formulations can be found in a variety of patents including U.S. Patents 4,810,594 and 3,297,484.

### Forming the Catalyst Region of the Electrode

Appropriate compositions of the electrode formulations can be found in such literature as U. S. Patent 3,297,484 and U. S. Patent 4,272,353.

### Assembling the Membrane/Electrode Combination

Once the membrane film and the electrode have been prepared, they must be assembled for use in a fuel cell. Again, a variety of methods can be used with the high performance membranes of the present invention. One suitable method is described in U. S. Patent 4,272,353.

After removing the M&E from the press package (in the procedure of U.S. Patent 4,272,353), it is desirable to place it in a sealable plastic bag with 10-20 ml of deionized water. Do not expose the M&E until it is ready for use in order to avoid damage or contamination. With the M&E on a cardboard backing, punch the appropriate holes to match the fuel cell. The membrane is now ready for mounting.

## Cell Assembly

Details of the construction, apparatus and components are as described in GE-LANL interim report "New membrane-catalyst for Solid Polymer Electrolyte Systems" No. 9-X53-D6272-1.

Before beginning assembly, be sure that all of the connecting passages between the plate-to-plate flow channels (the round holes perpendicular to the through the plates) and the active sections of the plates are protected from blockage by 0.008 inch (0.020 cm) niobium covers. The assembly starts from the pneumatic end plate (see the GE-LANL report) with that plate interior side up and bladder in place. The components are assembled in the order as shown. After tightening the retaining bolts, pressurize the bladder to about 250 psi (1.72 MPa), check for an electrical short with an ohmmeter and check for gas leakage by pressuring-up the feed lines one at a time to about 20 psi (138 kPa) and using a bubble tester on the other fluid lines. Position the cell in place and connect all the fluid lines. Connect the current leads firmly.

## Example 1

This example shows the preparation of a sulfonic fluoropolymer having an equivalent weight of about 794 and a low shear melt viscosity of about 50,000 poise (dyne sec-cm$^{-2}$) at 250°C and 4.35 sec$^{-1}$ and a 100°C water absorption of about 50 percent with high fuel cell power output. It also shows the formation of the polymer into a film, the preparation of an electrode and the formation of a membrane/electrode combination.

The polymer was prepared as follows.

A 132 liter glass-lined reactor equipped with an anchor agitator, H-baffle, a platinum resistance temperature device, and a temperature control jacket was charged with about 527 grams of ammonium perfluorooctanoate, about 398.4 grams of $Na_2HPO_4 \cdot 7H_2O$, about 328.8 grams $NaH_2PO_4 \cdot H_2O$ and about 210.8 grams of $(NH_4)_2S_2O_8$. The reactor was then evacuated down to about 0.0 atmosphere, as measured on the electronic pressure readout, and then an inert gas (nitrogen) was added to pressure up the reactor to a pressure of about 448 kPa. This was done a total of 4 times, then the reactor was evacuated one more time. About 99 liters of deoxygenated, deionized water was added, the agitator was started and heat was applied to the jacket. An agitator was set to about 250 revolutions per minute (rpm) and then about 15 ml of a terminating agent such as isopropyl alcohol was added, followed by about 16.65 kg of 2-fluorosulfonyl perfluoroethyl vinyl ether was added. When the temperature reached about 50°C, tetrafluoroethylene (TFE) gas was fed to the reactor at a rate of from 0.5 to 0.567 kg per minute, until a pressure of about 1060 kPa was reached over a period of about 17 minutes. The feed was continued until a total of about 18.18 kg. of TFE was added to the reactor. At this time, the feed was stopped and then nitrogen was blown through the gas phase portion of the system and ambient temperature water was added to the reactor jacket. The materials reacted to form a latex. The latex was transferred to a larger vessel for separation and stripping of residual monomer. After the contents were allowed to settle, a bottom dump valve was opened to allow separate phase monomer to be drained away. The vessel was then heated and a vacuum was applied to remove any further monomer components. After this, a brine system circulated about -20°C brine through cooling coils in the vessel to freeze the latex, which caused coagulation into large polymer agglomerates. After freezing was completed, the latex was allowed to thaw with slight warming (room temperature water) and the latex was transferred into a centrifuge where it was filtered and washed repeatedly with deionized water. The latex polymer cake was then dried overnight in a rotary cone dryer under vacuum (about 969 Pa) at about 110°C. The water content of the polymer was tested by Karl Fischer reagent and found to be about 140 ppm. The isolated polymer was weighed and found to be about 23.18 kg. The equivalent weight of the above polymer was determined to be 794.

The polymer was formed into a film using the methods described in U.S. 4,784,882.

The film was then hydrolyzed in an approximately 25 weight percent NaOH solution. The density of the hydrolysis solution was between 1.26 and 1.28 grams per ml at ambient temperature. The hydrolysis process consumed two moles of NaOH for each mole of the functional group in the polymer, as shown in the following equation:

$$-CF_2SO_2F + 2NaOH \rightarrow -CF_2SO_3Na + NaF + H_2O$$

The films were placed in the hydrolysis bath at room temperature, with inert, mesh materials holding the films in the liquid--making sure that there are no trapped bubbles around the films. The bath was then heated to about 85°C to about 90°C and then held at that temperature for a minimum of four hours to insure complete hydrolysis and expansion to the correct level. During the heating process, the membranes were checked to insure that no bubbles accumulate under the films.

After the hydrolysis heating step, the bath was allowed to cool to room temperature and the membranes were then removed from the bath and rinsed with high purity deionized water, then placed in a deionized water bath to leach out residual ionic substances.

The membranes were in the sodium form at this stage of their preparation and must be exchanged to the proton form for fuel cell use according to the following reaction:

$$-CF_2SO_3Na + H_2SO_4 \longrightarrow -CF_2SO_3H + NaHSO_4$$

To accomplish this conversion, two baths were utilized. The films were placed in a first bath and allowed to remain for 4 to 6 hours and then placed in the second bath for an additional time of 4 to 6 hours. The membranes were then removed from the bath and rinsed with deionized water and stored in deionized water until ready for the final cleanup step. High power fuel cell membranes are preferably substantially free of any residual acids, so the films were boiled in deionized water up to about three times to insure that substantially all acids and ionics are removed. Once the membranes were in the final, fully hydrated form, they can be stored in contact with water until ready for use.

The electrode fabrication process was comprised of two steps, wet proofing the conductive carbon fiber paper that serves as the current collector and forming the actual platinum electrode on the surface of that paper.

The wet proofing portion of this example was carried out in accordance with procedures described in U.S. Patent,4,810,594.

The catalyst region of the electrode was prepared according to the procedures described in U.S. Patent 3,297,484.

The membrane and electrode were attached according to the procedure outlined in U. S. Patent 4,272,353.

A fuel cell was assembled according to the instructions in the report referred to earlier, i.e., "New membrane-catalyst for Solid Polymer Electrolyte Systems" No. 9-X53-D6272-1.

The cell was operated and tested in accordance with the procedures in the report with the operating conditions being a cell temperature of about 80°C, an oxygen pressure of about 40 psig (276 kPa), and a hydrogen pressure of about 30 psig (207 kPa). The membrane gave excellent polarization performance with high power output. The expected results are shown in Figure 1 as "1".

**Example 2**

This example shows the preparation of a sulfonic fluoropolymer having an equivalent weight of about 769 and a low shear melt viscosity of about 52,000 poise (dyne sec-cm$^{-2}$.) at 250°C and 4.35 sec$^{-1}$ and a 100°C water absorption of about 50 percent with high fuel cell power output. A 132 liter glass-lined reactor equipped with an anchor agitator, H-baffle, a platinum resistance temperature device, and a temperature control jacket was charged with about 449.5 grams of ammonium perfluorooctanoate, about 340.5 grams of $Na_2HPO_4 \cdot 7H_2O$, about 281.5 grams $NaH_2PO_4 \cdot H_2O$ and about 179.2 grams of $(NH_4)_2S_2O_8$. The reactor was then evacuated down to about 0.0 atmosphere, as measured on the electronic pressure readout, and then an inert gas (nitrogen) was added to pressure up the reactor to a pressure of about 448 kPa. This was done a total of 4 times, then the reactor was evacuated one more time. About 84 liters of deoxygenated, deionized water was added, the agitator was started and heat was applied to the jacket. The agitator was set to about 250 rpm and then about 25.64 kg of 2-fluorosulfonyl perfluoroethyl vinyl ether was added. With the temperature about 50°C, TFE gas was fed to the reactor at a rate of from 0.5 to 0.567 kg per minute until a pressure of about 1060 kPa was reached over a period of about 17 minutes. The feed was continued until a total of about 23.6 kg of TFE had been added to the reactor. At this time, the feed was stopped and then nitrogen was blown through the gas phase portion of the system and ambient temperature water was added to the reactor jacket. The material reacted to form a latex. The latex was transferred to a larger vessel for separation and stripping of residual monomer. After the contents were allowed to settle, a bottom dump valve was opened to allow separate phase monomer to be drained away. The vessel was then heated and a vacuum was applied to remove any further monomer components. After this, a brine system circulated -20°C brine through cooling coils in the vessel to freeze the latex, causing coagulation into large polymer agglomerates. After freezing was completed, the latex was allowed to thaw with slight warming (room temperature water) and the latex was transferred into a centrifuge where it was filtered and washed repeatedly with deionized water. The polymer cake was then dried overnight in a rotary cone dryer under vacuum (about 969 Pa) at about 110°C. The water content of the polymer was tested by Karl Fischer reagent and found to be about 150 ppm. The isolated polymer was weighed and found to be about 34.4 kg.

The equivalent weight of the polymer was determined to be 769.

A film made from the process described in Example 1 was made. It was hydrolyzed, converted, washed, and formed into an M&E. It was then tested in the cell described in Example 1.

The expected results of the polarization curve is reported in Figure 1 and labeled "2".

## Example 3

This example shows the preparation of a sulfonic fluoropolymer having an equivalent weight of about 746 and a low shear melt viscosity of about 10000 poise (dyne sec-cm$^{-2}$.) at 250°C and 4.35 sec$^{-1}$ and a 100°C water absorption of about 72 percent with high fuel cell power output. A 132 liter glass-lined reactor equipped with an anchor agitator, H-baffle, a platinum resistance temperature device, and a temperature control jacket was charged with about 449.5 grams of ammonium perfluorooctanoate, about 340.5 grams of $Na_2HPO_4 \cdot 7H_2O$, about 281.5 grams $NaH_2PO_4 \cdot H_2O$ and about 179.2 grams of $(NH_4)_2S_2O_8$. The reactor was then evacuated down to about 0.0 atmosphere, as measured on the electronic pressure readout, and then an inert gas (nitrogen) was added to pressure up the reactor to a pressure of about 448 kPa. This was done a total of 4 times, then the reactor was evacuated one more time. About 84 liters of deoxygenated, deionized water was added, the agitator was started and heat was applied to the jacket. The agitator was set to about 250 rpm and then about 15 ml of a chain terminating agent, typically isopropanol was added and then 18.3 kg of 2-fluorosulfonyl perfluoroethyl vinyl ether was added. With the temperature about 60°C, TFE gas was fed to the reactor at a rate of from 0.5 to 0.567 kg per minute until a pressure of about 1325 kPa was reached over a period of about 17 minutes. The feed was continued until a total of about 20.5 kg of TFE had been added to the reactor. At this time, the feed was stopped and then nitrogen was blown through the gas phase portion of the system and ambient temperature water was added to the reactor jacket. The latex was then transferred to a larger vessel for separation and strip ping of residual monomer. After the contents was allowed to settle, a bottom dump valve was opened to allow separate phase monomer to be drained away. The vessel was then heated and a vacuum was applied to remove any further monomer components. After this, a brine system circulated -20°C brine through cooling coils in the vessel to freeze the latex, causing coagulation into large polymer agglomerates. After freezing was completed, the latex was allowed to thaw with slight warming (room temperature water) and the latex was transferred into a centrifuge where it was filtered and washed repeatedly with deionized water. The cake was then dried overnight in a rotary cone dryer under vacuum (about 969 Pa) at about 110°C. The water content of the polymer was tested by Karl Fischer 13. reagent and found to be about 150 ppm. The isolated polymer was weighed and found to be about 25 kg. The equivalent weight of the polymer was determined to be 746. A film made from the so described polymer by the above pro cess and carried through hydrolysis, ion conversion, and washing was formed into an M&E and tested in the cell of Example 1. The expected results of the polarization curve is reported in Figure 1, and reported as "3".

## Example 4

In this procedure, two polymers were prepared: Polymer I is an example of polymer which has a higher equivalent weight and a low melt viscosity. The equivalent weight was about 879 and the low shear melt viscosity was about 4380 poise. The 100°C water absorption was about 38 percent

A 132 liter glass-lined reactor equipped; with an anchor agitator, H-baffle, a platinum resistance temperature device, and a temperature control jacket was charged with about 449.5 grams of ammonium perfluorooctanoate, about 340.5 grams of $Na_2HPO_4 \cdot 7H_2O$, about 281.5 grams $NaH_2PO_4 \cdot H_2O$ and about 179.2 grams of $(NH_4)_2S_2O_8$. The reactor was then evacuated down to about 0.0 atmosphere, as measured on the electronic pressure readout, and then an inert gas (nitrogen) was added to pressure up the reactor to a pressure of about 448 kPa. This was done a total of 4 times, then the reactor was evacuated one more time. About 84 liters of deoxygenated, deionized water was added, the agitator was started and heat was applied to the jacket. The agitator was set to about 250 rpm and then 16.8 kg of 2-fluorosulfonyl perfluoroethyl vinyl ether was added. With the temperature about 50°C, TFE gas was fed to the reactor at a rate of from 0.5 to 0.567 kg per minute until a pressure of about 1113 Kpa was reached over a period of about 17 minutes. The feed was continued until a total of about 23.0 kg of TFE had been added to the reactor. At this time, the feed was stopped and then nitrogen was blown through the gas phase portion of the system and ambient temperature water was added to the reactor jacket. The latex was then transferred to a larger vessel for separation and stripping of residual monomer. After the contents was allowed to settle, a bottom dump valve was opened to allow separate phase monomer to be drained away. The vessel was then heated and a vacuum was applied to remove any further monomer components. After this, a brine system circulated -20°C brine through cooling coils in the vessel to freeze the latex, causing coagulation into large polymer agglomerates. After freezing was completed, the latex was allowed to thaw with slight warming (room temperature water) and the latex was transferred into a centrifuge where it was filtered and washed repeatedly with deionized water. The cake was then dried overnight in a rotary cone dryer under vacuum (about 969 Pa) at about 110°C. The water content of the polymer was tested by Karl Fischer reagent and found to be about 97 ppm. The isolated polymer was weighed and found to be about 21.1 kg.

The equivalent weight of the polymer was determined to be 879. The polymer was tested for melt viscosity at 4.35 $sec^{-1}$ at 250°C with a capillary 0.0565" and the viscosity was found to be 4380 poise. Polymer II was made to produce a polymer of about 780 equivalent weight but having a high melt viscosity. The 100°C water absorption was 52 percent.

A 132 liter glass-lined reactor equipped; with an anchor agitator, H-baffle, a platinum resistance temperature device, and a temperature control jacket was charged with about 527 grams of ammonium perfluorooctanoate, about 398.4 grams of $Na_2HPO_4 \cdot 7H_2O$, about 329 grams $NaH_2PO_4 \cdot H_2O$ and about 213 grams of $(NH_4)_2S_2O_8$. The reactor was then evacuated down to about 0.0 atmosphere, as measured on the electronic pressure readout, and then an inert gas (nitrogen) was added to pressure up the reactor to a pressure of about 448 kPa. This was done a total of 4 times, then the reactor was evacuated one more time. About 99 liters of deoxygenated, deionized water was added, the agitator was started and heat was applied to the jacket. The agitator was set to about 250 rpm and then 25.7 kg of 2-fluorosulfonyl perfluoroethyl vinyl ether was added. With the temperature about 50°C, TFE gas was fed to the reactor at a rate of from 0.5 to 0.567 kg per minute until a pressure of about 1060 kpa was reached over a period of about 17 minutes. The feed was continued until a total of about 23.3 kg of TFE had been added to the reactor. At this time, the feed was stopped and then nitrogen was blown through the gas phase portion of the system and ambient temperature water was added to the reactor jacket. The latex was then transferred to a larger vessel for separation and stripping of residual monomer. After the contents was allowed to settle, a bottom dump valve was opened to allow separate phase monomer to be drained away. The vessel was then heated and a vacuum was applied to remove any further monomer components. After this, a brine system circulated -20°C brine through cooling coils in the vessel to freeze the latex, causing coagulation into large polymer agglomerates. After freezing was completed, the latex was allowed to thaw with slight warming (room temperature water) and the latex was transferred into a centrifuge where it was filtered and washed repeatedly with deionized water. The cake was then dried overnight in a rotary cone dryer under vacuum (about 969 Pa) at about 110∎C. The water content of the polymer was tested by Karl Fischer reagent and found to be about 94 ppm. The isolated polymer was weighed and found to be about 30.45 kg.

The equivalent weight of the polymer was determined to be 779. The polymer was tested for melt viscosity by ASTM D-3835 at 250°C and at 4.35 $sec^{-1}$ using a 0.0565" capillary (1.44 mm) and the viscosity was found to be 121,000 poise. A polymer blend was prepared from polymer I and polymer II. The relative percentages of the two polymers was calculated to give a melt viscosity at the above conditions of 52,000 poise. This required 76 percent (wt.) of polymer II and 24 percent (wt.) of polymer I. The melt viscosity of the blend was found to be 52000 poise and the 100°C water absorption was found to be 52 weight percent and the equivalent weight was found to be 805. The blend of polymers I and II was fabricated into a film as described in Example 1. and processed as described into a fuel cell M&E. The polarization curve of this material was shown in Figure 1, as line "4".

## Comparative Example 1.

A film of a commercially available fuel cell polymer, designated as Nafion 117 with an equivalent weight of 1100, was assembled in an M&E assembly and placed in a fuel cell for testing, as described in Example 1. The expected results of the polarization curve was shown in Figure 1 and was labeled "C-1".

Nafion was tested according to the water absorption procedure defined in this specification and was found to have a water absorption of about 30.5 percent.

## Comparative Example 2

This Example shows the production of a membrane which has a water absorption outside the scope of the claims.

This example shows the preparation of a sulfonic fluoropolymer having an equivalent weight of about 1000 and a low shear melt viscosity of about 92,000 poise (dyne sec-$cm^{-2}$.) at 300°C and 4.35 $sec^{-1}$ and a 100°C water absorption of about 25.7 percent with good fuel cell power output. A 132 liter glass-lined reactor equipped; with an anchor agitator, H-baffle, a platinum resistance temperature device, and a temperature control jacket was charged with about 527 grams of ammonium perfluorooctanoate, about 398.4 grams of $Na_2HPO_4 \cdot 7H_2O$, about 328.8 grams $NaH_2PO_4 \cdot H_2O$ and about 179.2 grams of $(NH_4)_2S_2O_8$. The reactor was then evacuated down to about 0.0 atmosphere, as measured on the electronic pressure readout, and then an inert gas (nitrogen) was added to pressure up the reactor to a pressure of about 448 kPa. This was done a total of 4 times, then the reactor was evacuated one more time. About 84 liters of deoxygenated, deionized water was added, the agitator was started and heat was applied to the jacket. The agitator was set to about 250 rpm and then about 16.77 kg of 2-fluorosulfonyl perfluoroethyl vinyl ether was added. With the temperature about 50°C, TFE gas was fed to the reactor at a rate of from 0.5 to 0.567 kg per minute until a pressure of about 1439 kPa was reached over a period of about 17 minutes. The feed was continued until a total of about 23 kg of TFE had been added to the reactor. At this time, the feed was stopped and then nitrogen was blown through the gas phase portion of the system and ambient temperature water was added to the reactor jacket. The latex was then transferred to a larger vessel for separation and stripping of residual monomer. After the contents was allowed to settle, a bottom dump valve was opened to allow separate phase monomer to be drained away. The vessel was then heated and a vacuum was applied to remove any further monomer components. After this, a brine system circulated -20°C brine through cooling coils in the vessel to freeze the latex, causing coagulation into large polymer agglomerates. After freezing was completed, the latex was allowed to thaw with slight warming (room temperature water) and the latex was transferred into a centrifuge where it was filtered and washed repeatedly with deionized water. The cake was then dried overnight in a rotary cone dryer under vacuum (about 969 Pa) at about 110°C.

The water content of the polymer was tested by Karl Fischer reagent and found to be about 140 ppm. The isolated polymer was weighed and found to be about 26.2 kg.

The equivalent weight of the polymer was determined to be 1001.

A film made from the so described polymer by the above pro cess and carried through hydrolysis, ion conversion, and washing was formed into an M&E and tested in the cell of example 1. The expected results of the polarization curve was reported in Figure 1 and was labeled "C-2".

## Significance of the Examples

As compared to the Comparative Example 1, the examples show that at all useful current densities, cells using the claimed membranes operate at a higher voltage. This means that one gets a more efficient conversion of fuel into electrical energy and one gets more power out of the same volume of fuel cell.

Comparative Example 2 had a water absorption of 25.7 percent which is outside the scope of the claims. The example shows that fluoropolymers outside the scope of the invention will not deliver comparable power levels over the range of performance of the present invention.

From Figure 1, it can be seen that polymers of this basic technology and fuel cell membrane polymers in general possess unique combinations of properties which affect the performance in fuel cell applications. Comparative Example 1, a commercially available membrane of the prior art, has a water absorption of about 30.5 percent and an equivalent weight of 1100. Comparative Example 2, made as a comparative polymer to the present art, has a water absorption of about 25.7 percent and an equivalent weight of about 1000. The curves on Figure 1 show that there is a significant difference in the performance of the two polymers in fuel cells and neither of them is comparable to those of this art. The difference in the performance of these two polymers in a fuel cell and those of the present art is significant.

As a means of comparing the present art to the prior art, a blend of polymers that falls within the specifications in equivalent weight, water absorption and melt viscosity should therefore possess the desired high power performance characteristics. The primary properties of the present art are equivalent weight and water absorption and a further modifying property is the melt viscosity of the precursor, thermoplastic form of the polymer as determined by the standard ASTM D 3835 test method.

In order to make a blend that fits within the performance region of high power fuel cell films, polymers possessing divergent equivalent weights of about 879 and about 779 were selected. their water absorptions were 38 percent and 52 percent respectively. Their melt viscosities were about 4380 poise and about 121,000 poise, respectively. High power fuel cell membranes can be made from polymers that fall within the specifications of the present art; therefore, such a polymer was to be formed by making a blend of two very different polymers on a weight fraction basis as discussed in literature such as "Polymer Rheology" by Lawrence E. Neilsen, Marcel Dekker, Inc. Pub. 1977, p.63. It is known that melt viscosity behavior can be calculated on such a basis, but it is not known until this art that fuel cell polymers can be designed in this fashion. On the basis of these calculations, the polymers were blended in a ratio of 76 percent of the second polymer, and 24 percent of the first polymer. The resulting blend of the two polymers had an equivalent weight of 803, a melt viscosity of 52,000 Poise at the 4.35 sec$^{-1}$ test rate at 250°C and a water absorption of about 52 percent. The resulting film was a high power fuel cell membrane as shown by the expected performance as exemplified in Example 4 on Figure 1.

## Claims

1. A fluoropolymer material particularly suitable for use as a proton exchange membrane in a proton exchange membrane fuel cell, said fluoropolymer characterized by having:
   (a) an equivalent weight between 700 and 1,000; and
   (b) a water absorption as high as about 100 weight percent.

2. A fluoropolymer film particularly suitable for use as a proton exchange membrane in a proton exchange membrane fuel cell, said fluoropolymer film characterized by having:
   (a) an equivalent weight between 700 and 1,000; and
   (b) a water absorption as high as about 100 weight percent.

3. A proton exchange membrane fuel cell containing a fluoropolymer film which separates an anode from a cathode, said film characterized by having:
   (a) an equivalent weight between 700 and 1,000; and
   (b) a water absorption as high as about 100 weight percent.

4. A process for operating a fuel cell comprising feeding a fluid reactant into a compartment containing an anode, feeding a fluid reactant into a compartment containing a cathode, wherein the anode compartment and the cathode compartment are separated by a proton exchange fluoropolymer membrane film, wherein the improvement comprises the proton exchange fluoropolymer membrane film characterized by having:
   (a) an equivalent weight between 700 and 1,000;
   (b) and a water absorption as high as about 100 weight percent.

5. A fluoropolymer material particularly suitable for use as a proton exchange membrane in a proton exchange membrane fuel cell, said fluoropolymer material being a blend of at least two fluoropolymer materials, said blend characterized by having:
   (a) an equivalent weight between 700 and 1,000;
   (b) and a water absorption as high as about 100 weight percent.

6. A fluoropolymer material particularly suitable for use as a proton exchange membrane in a proton exchange membrane fuel cell, said fluoropolymer material characterized by being a blend of at least two fluoropolymer materials, wherein at least one of the fluoropolymer materials does not have at least one of the following:
   a melt viscosity between 6,000 and 80,000 poise at 250°C in accordance with ASTM test method D-3835;
   an equivalent weight between 700 and 1,000; and
   a water absorption as high as about 100 weight percent;
   said blend having:
   (a) an equivalent weight between 700 and 1,000;
   (b) and a water absorption as high as about 100 weight percent; and
   (c) a melt viscosity between 6,000 and 80,000 poise at 250°C in accordance with ASTM test method D-3835.

7. The fluoropolymer material of Claim 1, the fluoropolymer film of Claim 2, the proton exchange membrane fuel cell containing a fluoropolymer film of Claim 3, the process for operating a fuel cell containing a fluoropolymer membrane film of Claim 4, the blend of Claim 5 and the fluoropolymer material of Claim 6 wherein the fluoropolymer material has a melt viscosity of greater than about 18,000 poise.

8. The fluoropolymer material of Claim 1, the fluoropolymer film of Claim 2, the proton exchange membrane fuel cell containing a fluoropolymer film of Claim 3, the process for operating a fuel cell containing a fluoropolymer membrane film of Claim 4, the blend of Claim 5 and the fluoropolymer material of Claim 6 wherein the fluoropolymer film has a melt viscosity of greater than about 30,000 poise.

9. The fluoropolymer material of Claim 1, the fluoropolymer film of Claim 2, the proton exchange membrane fuel cell containing a fluoropolymer film of Claim 3, the process for operating a fuel cell containing a fluoropolymer membrane film of Claim 4, the blend of Claim 5 and the fluoropolymer material of Claim 6 wherein the fluoropolymer material has a melt viscosity of less than about 80,000 poise.

10. The fluoropolymer material of Claim 1, the fluoropolymer film of Claim 2, the proton exchange membrane fuel cell containing a fluoropolymer film of Claim 3, the process for operating a fuel cell containing a fluoropolymer membrane film of Claim 4, the blend of Claim 5 and the fluoropolymer material of Claim 6 wherein the fluoropolymer material has a melt viscosity of less than about 60,000 poise.

11. The fluoropolymer material of Claim 1, the fluoropolymer film of Claim 2, the proton exchange membrane fuel cell containing a fluoropolymer film of Claim 3, the process for operating a fuel cell containing a fluoropolymer membrane film of Claim 4, the blend of Claim 5 and the fluoropolymer material of Claim 6 wherein the fluoropolymer material has a melt viscosity of greater than about 30,000 and less than about 60,000 poise.

12. The fluoropolymer material of Claim 1, the fluoropolymer film of Claim 2, the proton exchange membrane fuel cell containing a fluoropolymer film of Claim 3, the process for operating a fuel cell containing a fluoropolymer membrane film of Claim 4, the blend of Claim 5 and the fluoropolymer material of Claim 6 wherein the fluoropolymer material has a water absorption greater than about 35 weight percent.

13. The fluoropolymer material of Claim 1, the fluoropolymer film of Claim 2, the proton exchange membrane fuel cell containing a fluoropolymer film of Claim 3, the process for operating a fuel cell containing a fluoropolymer membrane film of Claim 4, the blend of Claim 5 and the fluoropolymer material of Claim 6 wherein the fluoropolymer material has a water absorption less than about 100 weight percent.

14. The fluoropolymer material of Claim 1, the fluoropolymer film of Claim 2, the proton exchange membrane fuel cell containing a fluoropolymer film of Claim 3, the process for operating a fuel cell containing a fluoropolymer membrane film of Claim 4, the blend of Claim 5 and the fluoropolymer material of Claim 6 wherein the fluoropolymer material has a water absorption less than about 70 weight percent.

15. The fluoropolymer material of Claim 1, the fluoropolymer film of Claim 2, the proton exchange membrane fuel cell containing a fluoropolymer film of Claim 3, the process for operating a fuel cell containing a fluoropolymer membrane film of Claim 4, the blend of Claim 5 and the fluoropolymer material of Claim 6 wherein the fluoropolymer material has a water absorption less than about 70 weight percent and greater than about 50 weight percent.

16. The fluoropolymer material of Claim 1, the fluoropolymer film of Claim 2, the proton exchange membrane fuel cell containing a fluoropolymer film of Claim 3, the process for operating a fuel cell containing a fluoropolymer membrane film of Claim 4, the blend of Claim 5 and the fluoropolymer material of Claim 6 wherein the fluoropolymer material has a water absorption greater than about 50 weight percent and less than about 70 weight percent.

FIG.1

| DOCUMENTS CONSIDERED TO BE RELEVANT | | | EP 91122038.2 |
|---|---|---|---|

| Category | Citation of document with indication, where appropriate, of relevant passages | Relevant to claim | CLASSIFICATION OF THE APPLICATION (Int. Cl.5) |
|---|---|---|---|
| A | <u>WO - A - 86/06 879</u><br>(DOW)<br>* Claims 1,6,27 *<br>-- | 1,4,5 | H 01 M 2/16<br>H 01 M 8/10 |
| A | <u>US - A - 4 272 353</u><br>(LAWRANCE et al.)<br>* Examples *<br>---- | 1,4 | |

TECHNICAL FIELDS
SEARCHED (Int. Cl.5)

H 01 M
C 25 B

The present search report has been drawn up for all claims

| Place of search | Date of completion of the search | Examiner |
|---|---|---|
| VIENNA | 25-03-1992 | LUX |

EPO FORM 1503 03.82 (P0401)